# EUROPÄISCHE PATENTSCHRIFT

(11) **EP 0 703 344 B1**
(45) Veröffentlichungstag und Bekanntmachung des Hinweises auf die Patenterteilung: **23.09.1998**
(21) Anmeldenummer: 95111804.1
(22) Anmeldetag: 27.07.1995
(51) Int. Cl.: E06B 9/82, E05F 15/00

(54) **Vorrichtung zur selbsttätigen Endabschaltung eines Rollvorhangs, insbesondere eines Rolladenpanzers**
Selfactuating stopping device for a roller blind, especially for a roller shutter
Dispositif d'arrêt automatique d'un store à rouleau, notamment un volet roulant

(30) Priorität: 22.09.1994 DE 4433797
(43) Veröffentlichungstag der Anmeldung: 27.03.1996
(73) Patentinhaber: Klenk, Gottlieb, 73642 Welzheim (DE)
(72) Erfinder: Klenk, Gottlieb, 73642 Welzheim (DE)
(74) Vertreter: Reimold, Otto, Dipl.-Phys.Dr.

(56) Entgegenhaltungen:
- EP-A- 0 083 947
- WO-A-92/11432

## Beschreibung

Die Erfindung betrifft einen eine Wickelwelle enthaltenden Rollvorhang, insbesondere einen Rolladen, der zwischen einer abgelassenen unteren Endstellung und einer hochgezogenen oberen Endstellung verstellbar ist.

Wenn hier und im folgenden von einem Rollvorhang gesprochen wird, so ist damit nicht nur ein Rolladen sondern auch eine Jalousie, eine Markise, ein Garagentor usw. gemeint, d.h. ein flächenhafter Gegenstand, der auf eine Wickelwelle aufgewickelt wird.

Bei einem elektrisch betriebenen Rollvorhang muß, erfolgt keine Handabschaltung, gewährleistet sein, daß der Elektromotor von selbst ausgeschaltet wird, wenn die aufgewickelte obere Endstellung bzw. die abgewickelte untere Endstellung erreicht ist. Dabei beschäftigt sich die vorliegende Erfindung insbesondere mit der Endabschaltung in der oberen Endstellung.

Eine beispielsweise aus der DE-OS 35 03 816 hervorgehende Möglichkeit für eine solche Endabschaltung besteht darin, daß man eine den vom Rollvorhang zurückgelegten Weg erfassende wegabhängige Abschalteinrichtung mit einem der jeweiligen Endstellung zugeordneten Endschalter vorsieht, der beim Erreichen einer einstellbaren Schalt-Weglänge aus einer ersten Schaltstellung in eine zweite Schaltstellung geschaltet wird und dabei die Stromversorgung des Elektromotors unterbricht.

Bei einer solchen wegabhängigen Schalteinrichtung, bei der üblicherweise der zurückgelegte Weg durch Zählen der Umdrehungen der Wickelwelle erfasst wird, läßt sich der Schaltpunkt des Endschalters zwar genau auf die dem Endschalter zugeordnete Endstellung des Rollvorganges einstellen. Bei dieser Einstellung bleibt jedoch unberücksichtigt, daß sich das Wickelverhalten des Rollvorhanges beispielsweise in Abhängigkeit von den herrschenden Temperaturen, einer im Laufe der Zeit auftretenden Verschmutzung oder eines sonstigen Einflusses verändern kann. Tritt eine solche Veränderung auf, findet die Endabschaltung nicht mehr genau in der gewünschten Endstellung des Rollvorhanges statt, so daß eine Neueinstellung erforderlich wird.

Andererseits ist es alternativ zur wegabhängigen Endabschaltung bekannt, eine auf das an der Wickelwelle auftretende Drehmoment ansprechende drehmomentabhängige Abschalteinrichtung mit einem der jeweiligen Endstellung zugeordneten Endschalter vorzusehen, der beim Erreichen eines einstellbaren Drehmomentwerts betätigt wird und dabei die Stromversorgung des Elektromotors unterbricht. Solche drehmomentabhängigen Endabschaltungen gehen beispielsweise aus der DE-OS 28 30 360, der DE-OS 42 30 729 oder der DE-OS 38 43 917 hervor. Gelangt der Rollvorhang beim Hochziehen zur Anlage an einen Endanschlag, tritt an der Wickelwelle ein entsprechend erhöhtes Drehmoment auf bzw. wird der Elektromotor entsprechend stärker belastet, so daß der eingestellte Schalt-Drehmomentwert erreicht und der Endschalter betätigt wird.

Das zum Hochziehen des Rollvorhanges erforderliche Drehmoment nimmt, ausgehend von der unteren Endstellung, zunächst schnell zu, erreicht dann einen Maximalwert und nimmt sodann zur oberen Endstellung hin ab. Dies bedeutet bei den bekannten drehmomentabhängigen Abschaltungen, daß der genannte Schalt-Drehmomentwert, bei dem der Endschalter betätigt wird, auf einen mit Bezug auf den Maximalwert größeren Wert eingestellt werden muß, da der Rollvorhang sonst sozusagen unterwegs bei der dem Maximalwert entsprechenden Weglänge stehen bleibt. Dementsprechend wird der Rollvorhang in der oberen Endstellung mit einer sehr großen Kraft gegen den Endanschlag gezogen. Hierdurch werden die betroffenen Teile stark belastet. Außerdem steht der Rollvorhang, der Motor, die Wickelwelle usw. in der oberen Endstellung andauernd unter dem großen Schalt-Drehmoment.

Der vorliegenden Erfindung liegt deshalb die Aufgabe zugrunde, einen Rollvorhang der eingangs genannten Art zu schaffen, bei dem eine unabhängig vom momentanen Wickelverhalten genau in der oberen Endstellung erfolgende Abschaltung ohne das Auftreten unnötig großer Kräfte gewährleistet ist.

Diese Aufgabe wird durch die Merkmale des Patentanspruchs 1 gelöst.

Auf diese Weise wird der Rollvorhang unabhängig von der Schaltstellung des Drehmoment-Endschalters bis zur eingestellten Schalt-Weglänge hochgezogen. Dabei wird die Schalt-Weglänge so eingestellt, daß der Weg-Endschalter erst kurz vor Erreichen der oberen Endstellung des Rollvorhanges in seine zweite Schaltstellung geschaltet wird. Da zum Zeitpunkt dieses Schaltvorganges das für das Hochziehen des Rollvorhanges erforderliche Drehmoment kleiner als der Schalt-Drehmomentwert ist, nimmt der Drehmoment-Endschalter hier seine erste Schaltstellung ein, so daß der Rollvorhang vollends hochgezogen wird, bis der eingestellte Schalt-Drehmomentwert auftritt. Dieser Schalt-Drehmomentwert ist unabhängig vom beim Hochziehen maximal auftretenden Drehmoment. Er kann auf einen kleinen Wert eingestellt werden und muß lediglich so groß sein, daß sich der Drehmoment-Endschalter beim Umschalten des Weg-Endschalters in seiner ersten Schaltstellung befindet.

Bei Erreichen der eingestellten Schalt-Weglänge erfolgt also sozusagen ein Umschalten von der wegabhängigen Abschaltung auf die drehmomentabhängige Abschaltung. Bis dahin steht zum Öffnen des Rollvorhanges das volle Motordrehmoment zur Verfügung.

Auf diese Weise erfolgt die obere Endabschaltung unabhängig vom Wickel verhalten des Rollvorhanges stets genau in der oberen Endstellung, wobei die auftretenden Kräfte dem niedrigen Schalt-Drehmomentwert entsprechend klein sind.

Weiterhin ist aus der EP-A 83 947, die der Erfindung am nächsten kommt, ein eine Antriebsrolle aufweisendes Überkopftor bekannt, bei dem sowohl eine das an der Antriebsrolle des Torblatts auftretende Drehmoment messende Drehmoment-Messeinrichtung als auch eine den vom Torblatt zurückgelegten Weg messende Weg-Messeinrichtung vorhanden ist. Diese Vorrichtung weist jedoch einen elektronischen Rechner auf, in dem die sich aus den von den beiden Messeinrichtungen abgegebenen Signalen ergebenden Momentanwerte der Ist-Drehmoment-Wegkurve mit einer eingegebenen Soll-Drehmoment-Wegkurve verglichen werden, wobei der Rechner beim Auftreten einer einen eingegebenen Differenzbetrag (g) übersteigenden Differenz zwischen dem momentanen Drehmoment-Istwert und dem momentanen Drehmoment-Sollwert ein die Stromversorgung des Elektromotors unterbrechendes Steuersignal abgibt.

Ein Ausführungsbeispiel der Erfindung wird nun anhand der Zeichnung im einzelnen erläutert. Es zeigen:
- Fig. 1: ein Diagramm, in dem das zum Bewegen eines Rolladenpanzers als Rollvorhang erforderliche Drehmoment in Abhängigkeit von der bis zur oberen Endstellung zurückzulegenden Resthöhe eingezeichnet ist;
- Fig. 2: eine Ausführungsform der Erfindung in einer schaltbildartigen schematischen Darstellung,
- Fig. 3 bis 5: jeweils die Anordnung nach Fig. 2 in einem anderen Schaltzustand beim Hochziehen des Rollvorhanges,
- Fig. 6 bis 8: jeweils die Anordnung nach Fig. 2 in verschiedenen Schaltzuständen beim Ablassen des Rollvorhanges,
- Fig. 9: eine Variante der Anordnung nach Fig. 2,
- Fig. 10: eine den Fig. 2 bis 8 entsprechende erfindungsgemäße Vorrichtung in schematischer Darstellungsweise im Längsschnitt, wobei die Wickelwelle nur strichpunktiert angedeutet ist, und

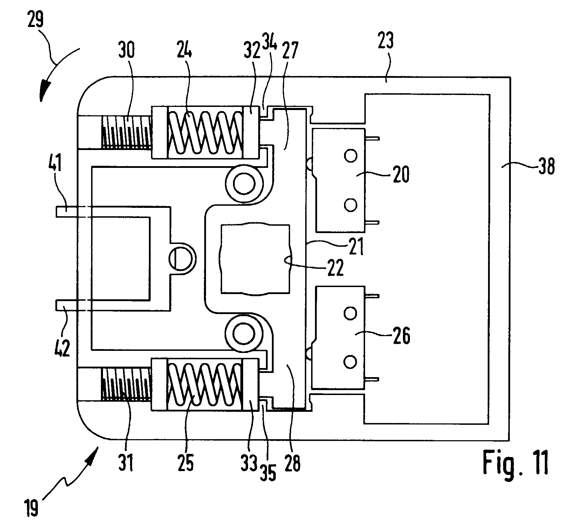

- Fig. 11: die drehmomentabhängige Abschalteinrichtung der Vorrichtung gemäß Fig. 10 in schematischer, zur Schnittdarstellung der Fig. 10 rechtwinkeligen Stirnansicht gemäß Pfeil XI bei abgenommenem Abschlußdeckel.

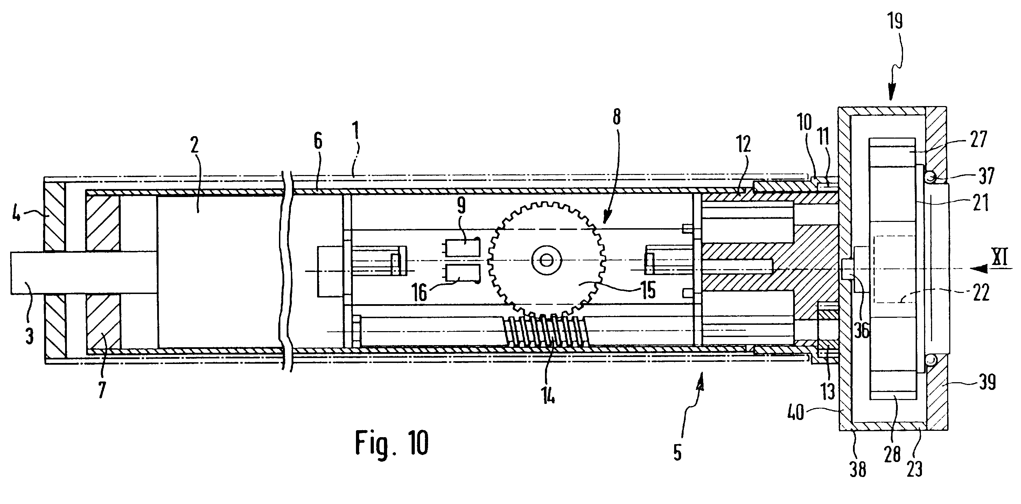

In Fig. 10 ist eine Wickelwelle 1 eines Rolladens, einer Jalousie, einer Markise, eines Garagentores oder eines sonstigen Rollvorhanges strichpunktiert angedeutet. Innerhalb der Wickelwelle 1 befindet sich ein Elektromotor 2 mit Übersetzungsgetriebe, dessen Antriebswelle 3 mit der Wickelwelle 1 drehfest verbunden ist, beispielsweise indem auf die Antriebswelle 3 ein Mitnehmer 4 aufgesetzt ist, der in das zugewandte Wickelwellenende eingesteckt ist und einen in dieses eingefügten Abschlußdeckel bilden kann. Der Mitnehmer 4 ist mit der Wickelwelle 1 beispielsweise verschraubt oder greift, falls die Wickelwelle unrund, z.B. sechseckig ist, formschlüssig in diese ein. Wird der Elektromotor 2 eingeschaltet, dreht sich die Wickelwelle 1 somit in die eine oder andere Richtung, so daß der Rollvorhang auf die Wickelwelle 1 aufgewickelt, d.h. hochgezogen, oder von der Wickelwelle 1 abgewickelt, d.h. abgelassen wird. Auf diese Weise ist der Rollvorhang also zwischen einer abgelassenen unteren Endstellung und einer hochgezogenen oberen Endstellung verstellbar.

Am entgegengesetzten Endbereich der Wickelwelle 1 ist eine Vorrichtung 5 zum selbsttätigen Abschalten des Elektromotors 2 in den Endstellungen vorhanden. Dabei bildet diese Vorrichtung 5 zusammen mit dem Elektromotor 2 eine in die Wickelwelle 1 eingreifende Baueinheit, die beim Ausführungsbeispiel ein in die Wickelwelle 1 eingestecktes Aufnahmerohr 6 aufweist, in dem der Elektromotor 2 drehfest untergebracht ist. Das Aufnahmerohr 6 wird am dem Motor 2 zugewandten Rohrende durch eine von der Antriebswelle 3 durchgriffenen Stirnwand 7 abgeschlossen.

Die Vorrichtung 5 enthält eine wegabhängige Abschalteinrichtung 8, die den vom Rollvorhang zurückgelegten Weg erfasst. Die beim Ausführungsbeispiel vorhandene wegabhängige Abschalteinrichtung 8 entspricht der aus der DE-OS 35 02 816 hervorgehenden Abschalteinrichtung, so daß hier nur das Prinzip erläutert wird. Dabei wird jedoch ausdrücklich darauf hingewiesen, daß auch beliebige andere wegabhängige Abschalteinrichtungen in Frage kommen, die mindestens einen der oberen Endstellung des Rollvorhanges zugeordneten und beim Erreichen einer einstellbaren Schalt-Weglänge beim Hochziehen aus einer ersten Schaltstellung in eine zweite Schaltstellung schaltenden Weg-Endschalter 9 enthält.

Im dargestellten Falle weist die Vorrichtung 5 einen an ihrem Außenumfang angeordneten, drehbar gelagerten Zahnring 10 mit einer Innenverzahnung 11 auf. Dabei ist der Zahnring 10 auf einem das Aufnahmerohr 6 am der Antriebswelle 3 entgegengesetzten Ende abschließenden und aus diesem vorstehenden Lagerteil 12 gelagert. Mit der Innenverzahnung 11 steht ein außenverzahntes Wegmeß-Zahnrad 13 kleineren Durchmessers in Eingriff, das drehfest mit einer Gewindespindel 14 verbunden ist, die ihrerseits mit einer drehbar gelagerten Zahnscheibe 15 kämmt. Das dem mittels dem Mitnehmers 4 angetriebenen Ende der Wickelwelle 1 entgegengesetzte Wickelwellenende ist drehfest mit dem den Zahnring 10 bildenden Teil verbunden und dabei auf dieses aufgesteckt. Wird die Wickelwelle von dem Motor 2 im Sinne eines Aufwickelns des Rollvorhanges gedreht, macht der Zahnring 10 und somit die Innenverzahnung 11 diese Rotation mit, so daß die Gewindespindel 14 über das Wegmeß-Zahnrad 13 im entsprechenden Drehsinn angetrieben wird. Hierdurch dreht sich die Zahnscheibe 15, so daß deren momentane Drehlage ein Maß dafür ist, wie weit der Rollvorhang im betreffenden Zeitpunkt hochgezogen ist. Zwischen der Zahnscheibe 15 und dem Weg-Endschalter 9 ist eine nicht dargestellte Betätigungseinrichtung angeordnet, die den Weg-Endschalter 9 dann aus einer ersten Schaltstellung in eine zweite Schaltstellung schaltet, wenn der Rollvorhang eine bestimmte Weglänge und somit die Zahnscheibe 15 einen entsprechenden Drehwinkel zurückgelegt hat. Dieser Schaltpunkt kann verstellt werden, beispielsweise indem man die relative Drehlage zwischen der Zahnscheibe 15 und der Betätigungseinrichtung verändert. Die vom Rollvorhang bis zum Schaltpunkt zurückgelegte Weglänge wird als Schalt-Weglänge bezeichnet. Die Einstellung des Schaltpunktes kann von außen her erfolgen. Würde die Vorrichtung 5 allein aus der wegabhängigen Abschalteinrichtung 8 bestehen, würde man die Schalt-Weglänge so einstellen, daß der Weg-Endschalter 9 dann betätigt wird, wenn der Rollvorhang in seine obere Endstellung gelangt ist. Durch die Schalterbetätigung würde dann die Stromversorgung des Elektromotors 2 unterbrochen werden.

Zweckmäßigerweise enthält die wegabhängige Abschalteinrichtung 8 noch einen zweiten, der unteren Endstellung des Rollvorhanges zugeordneten und beim Erreichen einer einstellbaren Schalt-Weglänge beim Ablassen aus einer ersten Schaltstellung in eine zweite Schaltstellung schaltenden Weg-Endschalter 16. Dreht der Elektromotor 2 die Wickelwelle 1 im Sinne eines Abwickelns des Rollvorhanges, drehen sich der Zahnring 10, das Wegmeß-Zahnrad 13, die Gewindespindel 14 und die Zahnscheibe 15 in entgegengesetzter Richtung wie oben beschrieben, so daß bei Erreichen der jeweils eingestellten Schalt-Weglänge eine entsprechende Betätigungseinrichtung den zweiten Weg-Endschalter in seine zweite Schaltstellung schaltet, in der die Stromversorgung des Elektromotors 2 unterbrochen wird.

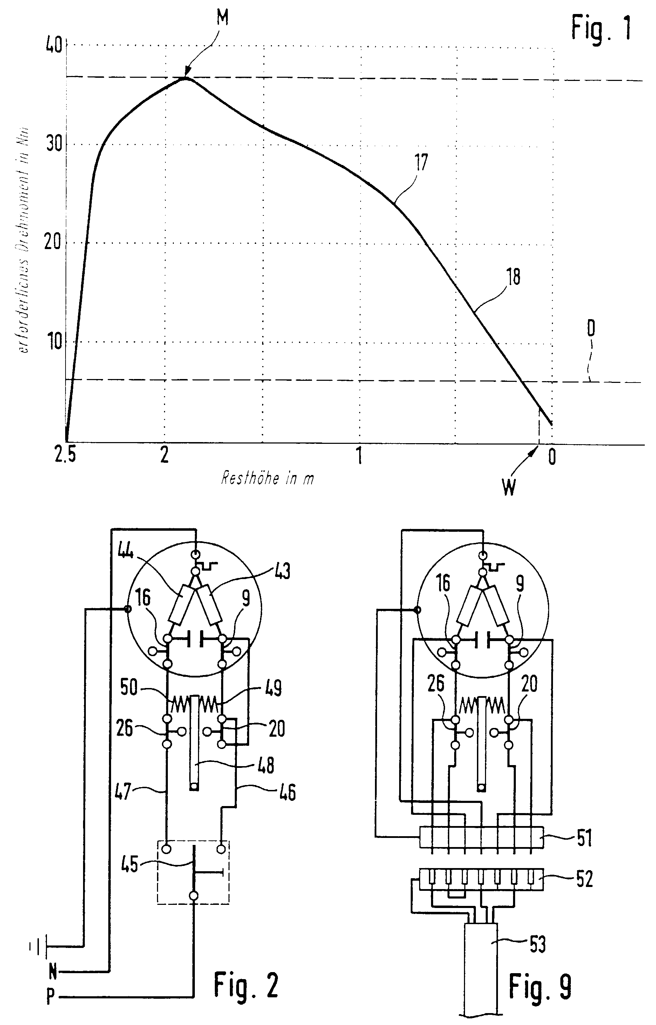

Zum Hochziehen des Rollvorhanges muß vom Elektromotor 2 her ein Drehmoment auf die Wickelwelle 1 aufgebracht werden. Dieses Drehmoment steigt, ausgehend von der unteren Endstellung, zunächst sehr steil an bis zu einem Maximalwert M und fällt nach Durchlaufen des Maximalwertes zur oberen Endstellung hin allmählich ab. Diese Abhängigkeit des für das Hochziehen erforderlichen Drehmomentes von der Resthöhe bis zum Erreichen der oberen Endstellung ist in Fig. 1 für einen Rolladen dargestellt. Die sich ergebende Kurve 17 weist also anschließend an den Maximalwert M des erforderlichen Drehmoments einen abfallenden und nahezu gegen Null gehenden Kurventeil 18 auf.

Dieses Drehmoment muß von der Befestigung des Elektromotors 2, d.h. des Motorgehäuses, aufgenommen werden. In diesem Zusammenhang ist es nun als Alternative zu einer wegabhängigen Abschaltung bekannt, eine drehmomentabhängige Abschalteinrichtung vorzusehen, die auf das an der Wickelwelle 1 auftretende Drehmoment anspricht und beim Erreichen eines einstellbaren Schalt-Drehmomentwertes eine die Stromversorgung des Elektromotors unterbrechende Schalterbetätigung ausführt. Solche in Abhängigkeit vom Drehmoment ansprechende Abschalteinrichtungen sind beispielsweise aus der DE-OS 28 30 360, der DE-OS 42 30 729 oder der DE-OS 38 43 917 bekannt.

Eine nach diesem Prinzip arbeitende drehmomentabhängige Abschalteinrichtung 19 ist auch im vorliegenden Falle vorhanden und bildet einen weiteren Bestandteil der Vorrichtung 5. Dabei kommt es darauf an, daß die drehmomentabhängige Abschalteinrichtung 19 nicht als Alternative zur wegabhängigen Abschalteinrichtung 8 sondern zusammen mit dieser eingesetzt wird, so daß sich eine Kombination aus wegabhängiger Abschalteinrichtung 8 und drehmomentabhängiger Abschalteinrichtung 19 ergibt, deren Schaltverhalten weiter unten erläutert wird.

Die Ausbildung der drehmomentabhängigen Abschalteinrichtung 19 im einzelnen ist von untergeordneter Bedeutung. Wesentlich ist aber im vorliegenden Zusammenhang, daß die drehmomentabhängige Abschalteinrichtung 19 mindestens einen der oberen Endstellung des Rollvorhanges zugeordneten Drehmoment-Endschalter 20 enthält, der beim Erreichen des eingestellten Schalt-Drehmomentwertes beim Hochziehen des Rollvorhanges aus einer ersten Schaltstellung in eine zweite Schaltstellung schaltet. Das Prinzip einer solchen drehmomentabhängigen Abschalteinrichtung besteht darin, daß der Elektromotor 2 am Einbauort entgegen einer einstellbaren Federkraft verdrehbar festgelegt ist, so daß das auf die Wickelwelle 1 aufgebrachte Drehmoment eine Winkelbewegung im entgegengesetzten Sinne entgegen der Federkraft hervorruft. Diese Winkelbewegung führt zur Schalterbetätigung.

Die beim Ausführungsbeispiel vorhandene drehmomentabhängige Abschalteinrichtung 19 ist von den bekannten drehmomentabhängigen Abschalteinrichtungen, die jedoch ebenfalls eingesetzt werden könnten, verschieden, so daß sie kurz erläutert wird:

Die drehmomentabhängige Abschalteinrichtung 19 enthält zunächst ein am Einbauort des Rollvorhanges, also beispielsweise im Rolladenkasten, drehfest zu lagerndes Schalterbetätigungsteil 21. Die drehfeste Lagerung kann beispielsweise dadurch erreicht werden, daß das Schalterbetätigungsteil 21 eine Vierkantausnehmung 22 enthält, mit der das Schalterbetätigungsteil 21 auf einen gebäudefesten Vierkantzapfen aufgesteckt ist. Die drehmomentabhängige Abschalteinrichtung 19 enthält ferner ein drehfest mit dem Elektromotor 2 verbundenes Schalterteil 23, das sich am Schalterbetätigungsteil 21 unter der einstellbaren Kraft einer Federanordnung 24, 25 in Umfangsrichtung abstützt, wobei am Schalterteil 23 der bereits erwähnte, der oberen Endstellung zugeordnete Drehmoment-Endschalter 20 angeordnet ist, der beim Verdrehen des Schalterteils 23 entgegen der Kraft der Federanordnung 24, 25 relativ zum Schalterbetätigungsteil 21 gegen dieses bewegt und von diesem geschaltet wird.

Die Anordnung ist koaxial zur Wickelwelle 1.

Die dargestellte drehmomentabhängige Abschalteinrichtung 19 enthält, wie auch die anderen bekannten Abschalteinrichtungen, noch einen zweiten Drehmoment-Endschalter 26, der dem Abwickeln des Rollvorhanges, wenn dieser abgelassen wird, zugeordnet ist. Dabei ist die Anordnung beim Ausführungsbeispiel so getroffen, daß das Schalterbetätigungsteil 21 wippenartige Gestalt mit zwei Betätigungsarmen 27, 28 aufweist, an denen jeweils einerseits eine für sich einstellbare Federkraft (Feder 24 bzw. Feder 25) angreift und andererseits der dem Hochziehen zugeordnete erste Endschalter 20 bzw. der dem Ablassen zugeordnete zweite Endschalter 26 angeordnet ist. Verdreht sich das Schalterteil 23in Richtung gemäß Pfeil 29 entgegen der Kraft der Feder 25, bewegt sich der erste Endschalter 20 zum zugewandten Betätigungsarm 27 und wird somit in seine zweite Schaltstellung geschaltet. Entsprechend wird bei einer Drehung des Schalterteils 23 in dem Pfeil 29 entgegengesetzter Richtung der zweite Endschalter 26 betätigt.

Bei den Federn 24,25 handelt es sich um Schraubenfedern, deren Federkraft, mit der sie gegen den betreffenden Betätigungsarm 27 bzw. 28 wirken, mittels einer Einstellschraube 30 bzw. 31 einstellbar ist. Die Druckfedern 24,25 für die drehmomentabhängige Endabschaltung können somit über die jeweilige Einstellschraube 30 bzw. 31 auf das für die Betätigung des zugeordneten Schalters erforderliche Drehmoment vorgespannt werden. Dabei ist die Anordnung noch so getroffen, daß die Federn 24,25 im Ruhezustand über ein Druckstück 32 bzw. 33 an einem Anschlag 34 bzw. 35 des Schalterteils 23 abgestützt sind, so daß das Schalterbetätigungsteil 21 im Ruhezustand unbelastet ist. Das Schalterbetätigungsteil 21 weist an seiner der Vierkantausnehmung 22 entgegengesetzten Seite einen Achsstummel 36 auf, der in eine entsprechende Lagerausnehmung des Schalterteils 23 eingreift. Das Schalterteil 23 ist ferner über ein Kugellager 37 am Schalterbetätigungsteil 21 gelagert, so daß es bei einem großen Gewicht des Rollvorhangs nicht zu einer Verkantung und dadurch zu einer Veränderung des Drehmoments kommen kann.

Das die Endschalter 20,26 und die Federn 24,25, enthaltende Schalterteil 23 weist ein der Stirnseite der Rolladenwelle 1 vorgelagertes Gehäuse 38 auf, in dem die Endschalter 20,26 und die einstellbaren Federn 24,25 untergebracht sind und das das Schalterbetätigungsteil 21 aufnimmt, das von der der Rolladenwelle 1 entgegengesetzten Stirnseite her zugänglich ist, so daß es bei der Montage gebäudeseitig befestigt werden kann. An dieser Stirnseite wird das Gehäuse 38 durch einen lösbar befestigten Abschlußdeckel 39 abgeschlossen, der eine für die Zugänglichkeit des Schalterbetätigungsteils 21 erforderliche Ausnehmung enthält. Der der Wickelwelle 1 zugewandte Bcden 40 des Gehäuses 38 enthält die dem Achsstummel 36 zugeordnete Lagerausnehmung.

Die drehmomentabhängige Abschalteinrichtung 19 ist, wie bereits erwähnt, mit dem Elektromotor 2 fest verbunden. Dabei bilden beim Ausführungsbeispiel die drehmomentabhängige Abschalteinrichtung 19, die wegabhängige Abschalteinrichtung 8 und der Elektromotor 2 eine fest zusammenhängende Baueinheit, die sich mit Ausnahme der drehmomentabhängigen Abschalteinrichtung 19 innerhalb der Wickelwelle 1 befindet.

Die drehmomentabhängige Abschalteinrichtung 19 ist somit von außen her zugänglich, so daß die Einstellschrauben 30,31 bei am Einbauort montiertem Rollvorhang eingestellt werden können.

Dabei sind die Einstellschrauben 30,31 am Umfang des Gehäuses 38 des Schalterteils 23 eingeschraubt. Ferner befinden sich am Schalterteil 23 noch zwei Einstellgriffe 41,42 od.dgl., die über geeignete Verbindungsmittel mit der wegabhängigen Abschalteinrichtung verbunden sind und mit denen sich der Schaltpunkt der Weg-Endschalter 9,16 einstellen läßt. Die Einstellgriffe 41,42 od.dgl. befinden sich ebenfalls am Umfang des Gehäuses 38.

Wie aus Fig. 10 ferner hervorgeht, ist beim Ausführungsbeispiel das Schalterteil 23 mit dem Gehäuseboden 40 fest mit dem den Zahnring 10 lagernden Lagerteil 12 verbunden, an dessen der drehmomentabhängigen Abschalteinrichtung 19 entgegengesetzten Seite die wegabhängige Abschalteinrichtung 8 angeordnet ist.

Der Vollständigkeit wegen wird noch darauf hingewiesen, daß die Gesamtanordnung am der drehmomentabhängigen Abschalteinrichtung 19 entgegengesetzten Ende über die Antriebswelle 3 und ein geeignetes Lagerteil (nicht dargestellt) am Einbauort gelagert ist.

Wäre die drehmomentabhängige Abschalteinrichtung 19 allein ohne die wegabhängige Abschalteinrichtung 8 vorhanden, müßte die dem ersten Drehmoment-Endschalter 20 zugeordnete Feder 25 so stark vorgespannt werden, daß der erste Drehmoment-Endschalter 20 erst bei einem den Maximalwert M der Drehmoment-Wegkurve (Fig. 1) übersteigenden Wert in seine zweite Schaltstellung geschaltet wird. Andernfalls würde der Schalter 20 im Verlaufe des Hochziehens des Rollvorhangs betätigt werden, wenn das zum Hochziehen erforderliche Drehmoment den mittels der Feder 25 eingestellten Schalt-Drehmomentwert erreicht hat. Ein den Maximalwert M übersteigendes Schalt-Drehmoment hätte jedoch zur Folge, daß der Rollvorhang in der oberen Endstellung, in der er gegen einen nicht dargestellten ortsfesten Endanschlag läuft, entsprechend stark gegen diesen Endanschlag gedrückt werden müßte, damit das zum Schalten des Drehmoment-Endschalters 20 und somit zum Abschalten des Motors erforderliche Drehmoment entsteht. Die damit verbundenen Nachteile wurden bereits in der Beschreibungseinleitung erwähnt.

Demgegenüber erreicht man im vorliegenden Falle durch die Kombination der drehmomentabhängigen Abschalteinrichtung 19 mit der wegabhängigen Abschalteinrichtung 8 und durch eine entsprechende Verknüpfung des Drehmomcnt-Endschalters 20 und des Weg-Endschalters 9, die beide der oberen Endstellung des Rollvorhangs zugeordnet sind, daß das Abschalten der Stromversorgung des Motors 2 in der oberen Endstellung bei einem sehr niedrigen Drehmoment erfolgt, so daß der Drehmoment-Endschalter 20 auf einen entsprechend niedrigen Schalt-Drehmomentwert eingestellt werden kann.

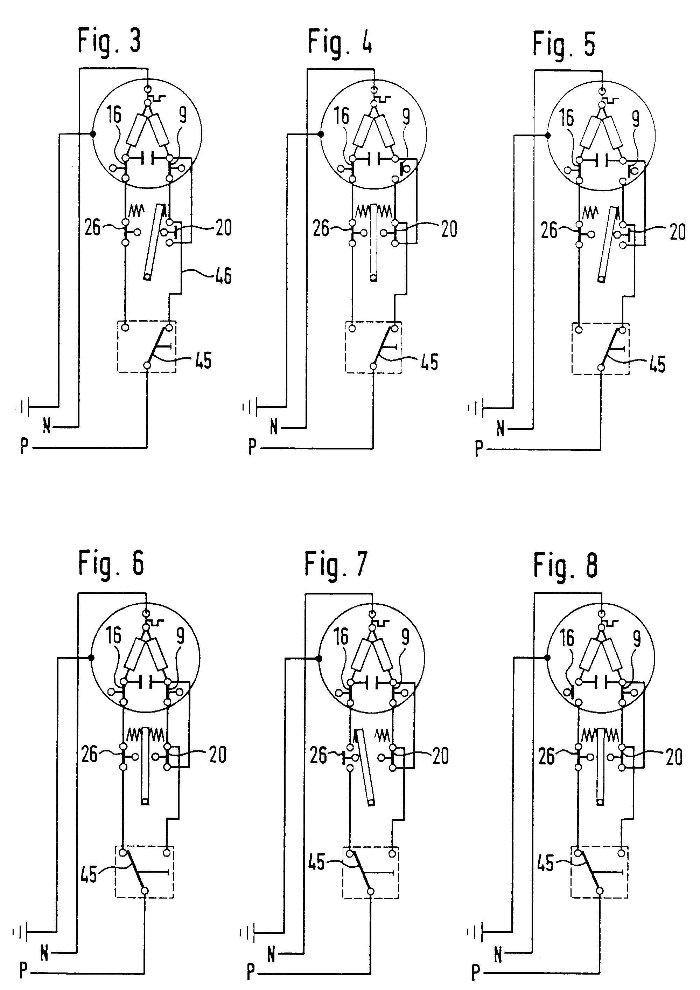

Gemäß Fig. 2 enthält der Elektromotor 2 zwei dem Hochziehen und dem Ablassen des Rollvorhangs zugeordnete Wicklungen 43, 44, deren Funktionen (Hauptwicklung bzw. Hilfswicklung) beim Hochziehen und Ablassen vertauscht werden. Mittels eines an die Phase P gelegten Betätigungsschalters 45 kann gewählt werden, ob der Rollvorhang hochgezogen wird (aus den Fig. 3 bis 5 hervorgehende Stellung) oder abgelassen wird (aus den Fig. 6 bis 8 hervorgehende Stellung). Der erste Weg-Endschalter 9 und der erste Drehmoment-Schalter 20 sind, beim Ausführungsbeispiel unmittelbar, in der vom Betätigungsschalter 45 zur dem Hochziehen zugeordneten Motorwicklung 43 führenden Stromversorgungsleitung 46 angeordnet, wobei es sich um eine elektrische Parallelanordnung handelt. Die Motorwicklung 43 ist andererseits an den Nullleiter N angeschlossen. In Fig. 2 sind die beiden ersten Endschalter 9, 20 in ihrer ersten Schaltstellung gezeigt, die beim Ausführungsbeispiel die Schließstellung ist.

Der zweite wegabhängige Endschalter 16 und der zweite Drehmoment-Endschalter 26, die dem Ablassen des Rollvorhangs zugeordnet sind, befinden sich, beim Ausführungsbeispiel wiederum unmittelbar, in der anderen Stromversorgungsleitung 47, die vom Betätigungsschalter 45 zur der Ablaßbewegung des Rollvorhangs zugeordneten Motorwicklung 44 führt. Durch Umlegen des Betätigungsschalters 45 wird entweder die eine Stromversorgungsleitung 46 oder die andere Stromversorgungsleitung 47 mit der Stromquelle verbunden. Die beiden zweiten Endschalter 16, 26 sind dabei elektrisch in Reihe zueinander angeordnet.

Wie oben erläutert, werden die beiden Weg-Endschalter 9,16 bei einer einstellbaren Weglänge in Aufwärtsrichtung des Rollvorhangs bzw. bei einer einstellbaren Weglänge in Abwärtsrichtung des Rollvorhangs aus der in Fig. 2 eingenommenen ersten Schaltstellung in die zweite Schaltstellung geschaltet. Entsprechendes gilt für die beiden Drehmoment-Endschalter 20,26, die bei Erreichen eines einstellbaren Schalt-Drehmoments beim nach oben bzw. nach unten Bewegen des Rollvorhangs aus ihrer dargestellten ersten Stellung in die zweite Schaltstellung geschaltet werden.

In Fig. 2 und den nachfolgenden entsprechenden Figuren ist zwischen den beiden Drehmoment-Endschaltern 20,26 ein funktionsmäßig dem Schalterbetätigungsteil 21 entsprechender Schwenkarm 48 dargestellt, der nach beiden Richtungen mit einer einstellbaren Federkraft belastet ist. Es handelt sich hier um die beiden angedeuteten Federn 49,50, die in der Funktion den zuvor beschriebenen Federn 24,25 entsprechen. Schwenkt der Schwenkarm 48 unter dem auftretenden Drehmoment in Fig. 2 nach rechts, betätigt er den ersten Drehmoment-Endschalter 20 im Sinne eines öffnens. Schwenkt der Schwenkarm 48 dagegen nach links, wenn der Rollvorhang bei seiner Ablaßbewegung irgend wo anstößt, betätigt er den zweiten Drehmoment-Endschalter 26 und überführt ihn, ebenfalls im Sinne eines Öffnens, in seine zweite Schaltstellung.

Wie die einzelnen Endschalter im einzelnen betätigt werden, interessiert hier nicht weiter. Wesentlich ist nur ihr Vorhandensein, daß sie eine einstellbare Schalt-Weglänge bzw. einen einstellbaren Schalt-Drehmomentwert haben und daß sie wie gezeigt angeordnet und verknüpft sind. Dies gilt in erster Linie für die beiden ersten Endschalter 9,20, die dem Hochziehen des Rollvorhangs zugeordnet sind. Hinsichtlich der beiden zweiten Endschalter 16,26 könnte die Anordnung auch anders getroffen sein, da es im vorliegenden Zusammenhang weniger auf die Motorabschaltung beim Ablassen des Rollvorhangs ankommt.

Vorgesehen ist nun, daß der Schalt-Drehmomentwert des ersten Drehmoment-Endschalters 20 auf einen kleineren Wert D (siehe Fig. 1) als der Maximalwert M eingestellt wird und daß bei dem ersten Weg-Endschalter 9 die Schalt-Weglänge (diese entspricht in dem Diagramm der Fig. 1 der Resthöhe) so gewählt wird, daß das ihr auf dem abfallenden Teil 18 der Drehmoment-Drehkurve 17 entsprechende Drehmoment kleiner als der Schalt-Drehmomentwert D ist. Die Schalt-Weglänge befindet sich in Fig. 1 beispielsweise bei W. In Zusammenhang damit, daß beim Hochziehen die Stromversorgung des Motors 2 nur dann unterbrochen ist, wenn bei den beiden Endschaltern 9,20 gleichzeitig die zweite Schaltstellung vorliegt, ergibt sich dann folgende Wirkungsweise, die anhand der Fig. 3 bis 5 erläutert wird:

Der Betätigungsschalter 45 wird auf "Hochziehen" gestellt, so daß die Stromversorgungsleitung 46 an das Stromnetz angeschlossen ist. Beginnt man mit der unteren Endstellung des Rollvorhangs, so nimmt das erforderliche Drehmoment zunächst stark zu. Dabei wird der eingestellte Schalt-Drehmomentwert D überschritten, so daß der Drehmoment-Endschalter 20 öffnet. Hierdurch wird die Stromversorgung des Elektromotors 2 wegen des noch geschlossenen (erste Schaltstellung) Weg-Endschalters 9 nicht unterbrochen (Fig. 3). Nach Durchlaufen des Drehmoment-Maximalwerts M nimmt das erforderliche Drehmoment ab. Ist es gleich groß wie der für den ersten Drehmoment-Endschalter 20 eingestellte Schalt-Drehmomentwert D, schaltet der Drehmoment-Endschalter 20 wieder in seine erste Schaltstellung im Sinne eines Schließens. Zu diesem Zeitpunkt befindet sich auch der erste Weg-Endschalter 9 noch in seiner ersten Schaltstellung, so daß beide Endschalter geschlossen sind. Erreicht der Rollvorhang dann die Schalt-Weglänge W, schaltet der Weg-Endschalter 9 in seine zweite Schaltstellung, in der er offen ist (Fig. 4). Die Stromversorgung des Elektromotors 2 erfolgt jetzt über den geschlossenen Drehmoment-Endschalter 20. Sodann gelangt der Rollvorhang zur Resthöhe Null, d.h. in seine obere Endstellung, wo er am bereits erwähnten Endanschlag anschlägt. Da sich der Rollvorhang nicht weiter hochziehen läßt, nimmt das an der drehmomentabhängigen Abschalteinrichtung 19 wirksame Drehmoment zu, bis es den Schalt-Drehmomentwert D erreicht und der Drehmoment-Endschalter 20 hierdurch in seine zweite Schaltstellung geschaltet wird, so daß jetzt beide Endschalter 9,20 geöffnet sind und die Stromversorgung des Motors 2 unterbrochen ist (Fig. 5).

Die eingestellte Schalt-Weglänge W kann der oberen Endstellung des Rollvorhangs nahe benachbart sein. Entsprechend niedrig kann der eingestellte Schalt-Drehmomentwert sein, so daß bei der Motorabschaltung in der oberen Endstellung nur kleine Kräfte auftreten.

Bei der eingestellten Schalt-Weglänge erfolgt sozusagen ein Umschalten von einer wegabhängigen Steuerung zu einer drehmomentabhängigen Steuerung.

Die beiden zweiten Endschalter 16,26, die dem Ablassen des Rollvorhangs zugeordnet sind, sind beim Ausführungsbeispiel dagegen so miteinander verknüpft, daß die Stromversorgung des Elektromotors 2 so gesteuert wird, daß sie bei Vorliegen der zweiten Schaltstellung (Öffnen) nur bei einem der beiden Endschalter unterbrochen ist. Dies wird mit der erwähnten Reihenschaltung erreicht.

In Fig. 6 befinden sich die beiden zweiten Endschalter 16,26 in ihrer ersten Schaltstellung (geschlossen), die sie in der oberen Endstellung des Rollvorhangs einnehmen. Stößt der Rollvorhang beim Ablassen auf einen Widerstand, wird der auf einen entsprechenden Schalt-Drehmomentwert eingestellte zweite Drehmoment-Endschalter 26 geschaltet und die Stromversorgung des Elektromotors 2 somit unterbrochen (Fig. 7). Tritt ein solcher Widerstand jedoch nicht auf, gelangt der Rollvorhang in seine untere Endstellung, in der der Motor 2 mittels des zweiten Weg-Endschalters 16 abgeschaltet wird, dessen Schalt-Weglänge dementsprechend auf die untere Endstellung des Rollvorhangs eingestellt wird. Der Weg-Endschalter 16 öffnet also, so daß der Rollvorhang stehen bleibt (Fig. 8).

Die Vorrichtung 5 und der Motor 2 werden je nach den örtlichen Gegebenheiten am Einbauort von der einen oder der anderen Seite der Wickelwelle 1 her mit dieser verbunden. Bei einem solchen seitenvertauschten Einbau kehren sich die Wicklungsrichtungen beim Hochziehen bzw. Ablassen des Rollvorhangs um.Um nun einen solchen seitenvertauschten Einbau zu ermöglichen, ist bei einer zweckmäßigen Ausgestaltung vorgesehen (siehe Fig. 9), daß die ersten Endschalter 9,20 und die zweiten Endschalter 16,26 in ihrer Funktion vertauschbar sind, indem sie jeweils beide Funktionen ermöglichende Anschlußleitungen aufweisen, die an dem vorrichtungsseitigen Kupplungsteil 51 einer Steckkupplung od.dgl. enden, deren anderen Kupplungsteil 52 an ein elektrisches Versorgungskabel 53 angeschlossen und so beschaltet ist, daß bei seitenverkehrtem Zusammenstecken der Kupplungsteile 51,52 die Endschalter ihre Funktion vertauschen. Das elektrische Versorgungskabel 53 enthält den in Fig. 9 nicht dargestellten Betätigungsschalter 45. Werden die beiden Kupplungsteile 52,53 gemäß Fig. 9 zusammengesteckt, sind die beiden Endschalter 16,26 parallel zueinander und die beiden Endschalter 9,20 in Reihe geschaltet, so daß die Endschalter 16,26 dem Hochziehen und die Endschalter 9, 20 dem Absenken des Rollvorhangs zugeordnet sind. Bei seitenvertauschtem Zusammenstecken der Kupplungsteile kehren sich die Funktionen um, so daß dann die der Fig. 2 entsprechende Schaltung wirksam ist.

## Patentansprüche

1. Wickelwelle (1) enthaltender Rollvorhang, insbesondere ein Rolladen, der zwischen einer abgelassenen unteren Endstellung und einer hochgezogenen oberen Endstellung verstellbar ist, in der oberen Endstellung gegen einen Endanschlag läuft und eine Vorrichtung zur selbsttätigen Endabschaltung eines die Wickelwelle antreibenden Elektromotors (2) enthält, wobei das zum Verstellen des Rollvorhangs aus der unteren Endstellung in die obere Endstellung erforderliche Drehmoment in Abhängigkeit vom zurückgelegten Weg einer einen Maximalwert durchlaufenden und anschließend zur oberen Endstellung hin abfallenden Kurve folgt und die Vorrichtung zur selbsttätigen Endabschaltung sowohl eine auf das an der Wickelwelle (1) auftretende Drehmoment ansprechende Drehmoment abhängige Abschalteinrichtung (19) mit mindestens einem der oberen Endstellung zugeordneten und beim Erreichen eines bestimmten Schalt-Drehmomentwerts beim Hochziehen aus einer ersten Schaltstellung in eine zweite Schaltstellung schaltenden Drehmoment-Endschalter (20) als auch eine der vom Rollvorhang zurückgelegten Weg erfassende wegabhängige Schalteinrichtung (8) mit mindestens einem der oberen Endstellung zugeordneten und beim Erreichen einer einstellbaren Schalt-Weglänge beim Hochziehen aus einer ersten Schaltstellung in eine zweite Schaltstellung schaltenden Weg-Endschalter (9) enthält, wobei die beiden der oberen Endstellung zugeordneten Endschalter (9,20) so miteinander verknüpft sind und die Stromversorgung des Elektromotors (2) steuern, daß die Stromversorgung bei gleichzeitigem Vorliegen der zweiten Schaltstellung bei beiden Endschaltern (9,20) unterbrochen ist und wobei der Schalt-Drehmomentwert (D) auf einen kleineren Wert als der Maximalwert (M) eingestellt ist und die Schalt-Weglänge (W) so gewählt wird, daß das ihr auf dem abfallenden Teil (18) der Drehmoment-Wegkurve (17) entsprechende Drehmoment kleiner als der Schalt-Drehmomentwert (D) ist.

2. Rollvorhang nach Anspruch 1, dadurch gekennzeichnet, daß die beiden der oberen Endstellung zugeordneten Endschalter (9,20) unmittelbar in der Stromversorgungsleitung (46) des Elektromotors (2) angeordnet sind.

3. Rollvorhang nach Anspruch 2, dadurch gekennzeichnet, daß die beiden der oberen Endstellung zugeordneten Endschalter (9,20) elektrisch parallel zueinander angeordnet sind.

4. Rollvorhang nach einem der Ansprüche 1 bis 3, dadurch gekennzeichnet, daß die drehmomentabhängige Abschalteinrichtung (19) einen zweiten, der Ablaßbewegung des Rollvorhangs zugeordneten und beim Erreichen eines bestimmten Schalt-Drehmomentwerts beim Ablassen aus einer ersten Schaltstellung in eine zweite Schaltstellung schaltenden Drehmoment-Endschalter (26) und die wegabhängige Abschalteinrichtung (8) einen zweiten, der unteren Endstellung zugeordneten und beim Erreichen einer einstellbaren Schalt-Weglänge beim Ablassen aus einer ersten Schaltstellung in eine zweite Schaltstellung schaltenden Weg-Endschalter (16) enthält, wobei die beiden der unteren Endstellung zugeordneten Endschalter (16,26) so miteinander verknüpft sind und die Stromversorgung des Elektromotors (2) steuern, daß die Stromversorgung bei Vorliegen der zweiten Schaltstellung nur bei einem der beiden Endschalter (16,26) unterbrochen ist.

5. Rollvorhang nach Anspruch 4, dadurch gekennzeichnet, daß die beiden zweiten Endschalter (16,26) unmittelbar in der Stromversorgungsleitung (47) des Elektromotors (2) angeordnet sind.

6. Rollvorhang nach Anspruch 5, dadurch gekennzeichnet, daß die beiden zweiten Endschalter (16,26) elektrisch in Reihe zueinander angecrdnet sind.

7. Rollvorhang nach einem der Ansprüche 4 bis 6, dadurch gekennzeichnet, daß für ihren seitenvertauschbaren Einbau die ersten Endschalter und die zweiten Endschalter in ihrer Funktion vertauschbar sind, indem sie jeweils beide Funktionen ermöglichende Anschlußleitungen aufweisen, die an dem vorrichtungsseitigen Kupplungsteil (51) einer Steckkupplung od.dgl. enden, deren anderes Kupplungsteil (52) an ein elektrisches Versorgungskabel (53) angeschlossen und so beschaltet ist, daß bei seitenverkehrtem Zusammenstecken der Kupplungsteile (51,52) die Endschalter ihre Funktion vertauschen.

8. Rollvorhang nach einem der Ansprüche 1 bis 7, dadurch gekennzeichnet, daß die drehmomentabhänge Abschalteinrichtung (19) ein am Einbauort des Rollvorhangs drehfest zu lagerndes Schalterbetätigungsteil (21) und ein drehfest mit dem Elektromotor (2) verbundenes, sich am Schalterbetätigungsteil (21) unter der einstellbaren Kraft einer Federanordnung (24,25) in Umfangsrichtung abstützendes Schalterteil (23) aufweist, an dem der mindestens eine Drehmoment-Endschalter angeordnet ist, der beim Verdrehen des Schalterteils (23) entgegen der Kraft der Federanordnung relativ zum Schalterbetätigungsteil (21) gegen dieses bewegt und von diesem geschaltet wird.

9. Rollvorhang nach Anspruch 8, dadurch gekennzeichnet, daß das Schalterbetätigungsteil (21) bei zwei Drehmoment-Endschalten (20,26) wippenartige Gestalt mit zwei Betätigungsarmen (27,28) aufweist, an denen jeweils einerseits eine für sich einstellbare Federkraft (24 bzw. 25) angreift und andererseits einer der Drehmoment-Endschalter (20 bzw. 26) angeordnet ist.

10. Rollvorhang nach einem der Ansprüche 1 bis 9, dadurch gekennzeichnet, daß die Vorrichtung zur selbsttätigen Endabschaltung zusammen mit dem Elektromotor (2) eine in die Wickelwelle (1) eingreifende Baueinheit bildet.

## Claims

1. Roller covering, in particular a roller shutter, containing a winding shaft (1), which is adjustable between a lowered bottom end position and a raised top end position, running against an end stop in the top end position and containing a device for automatic cut-out of an electric motor (2) driving the winding shaft, wherein the torque required to move the roller covering from the bottom end position to the top end position, depending on the distance covered, follows a curve which passes through a maximum value and then falls towards the top end position, and the device for automatic cut-out has both a cut-off element (19) dependent on the torque responding to the torque occurring at the winding shaft (1) with at least one torque limit switch (20) assigned to the top end position and switching from a first switching position to a second switching position when a certain switching torque value is reached during raising, and also a travel-dependent switching device (8) which detects the distance covered by the roller covering and has a travel limit switch (9) assigned to the top end position and switching from a first switching position to a second switching position when a certain settable switching travel length is reached during raising, wherein the two limit switches (9, 20) assigned to the top end position are so connected and control the power supply to the electric motor (2) that the power supply is interrupted when both limit switches (9, 20) are in the second switching position, and wherein the switching torque value (D) is set at a lower value than the maximum value (M) and the switching travel length (W) is so chosen that its torque corresponding to the falling part (18) of the torque-travel curve (17) is less than the switching torque value (D).

2. Roller covering according to claim 1, characterized in that the two limit switches (9, 20) assigned to the top end position are mounted directly in the power supply cable (46) of the electric motor (2).

3. Roller covering according to claim 2, characterized in that the two limit switches (9, 20) assigned to the top end position are arranged electrically parallel to one another.

4. Roller covering according to any of claims 1 to 3, characterized in that the torque-dependent cut-off element (19) has a second torque limit switch (26) assigned to the lowering movement of the roller covering and switching from a first switching position to a second switching position when a certain switching torque value is reached during lowering, and the travel-dependent cut-off device (8) has a second travel limit switch (16) assigned to the bottom end position and switching from a first switching position to a second switching position when a certain settable switching travel length is reached during lowering, wherein the two limit switches (16, 26) assigned to the bottom end position are so connected and control the power supply to the electric motor (2) that the power supply is interrupted when only one of the two limit switches (16, 26) is in the second switching position.

5. Roller covering according to claim 4, characterized in that the two second limit switches (16, 26) are mounted directly in the power supply cable (47) of the electric motor (2).

6. Roller covering according to claim 5, characterized in that the two second limit switches (16, 26) are arranged electrically in series.

7. Roller covering according to any of claims 4 to 6, characterized in that, for their side-transposable mounting, the first limit switches and the second limit switches are interchangeable in function, in that they each have connecting leads permitting both functions and terminating at the device-side coupling element (51) of a plug connector or the like, with the other coupling element (52) being connected to an electrical supply cable (53) and so wired that the limit switches change their function when the coupling elements (51, 52) are connected with sides transposed.

8. Roller covering according to any of claims 1 to 7, characterized in that the torque-dependent cut-off element (19) has a switch actuation element (21) for non-rotatable mounting at the fitting point of the roller covering, and a switch element (23) connected non-rotatably to the electric motor (2) and resting in the peripheral direction on the switch actuation element (21) under the adjustable force of a spring assembly (24, 25), said switch element (23) having at least one torque limit switch which, when the switch element (23) is turned against the force of the spring assembly relative to the switch actuation element (21), moves towards the latter and is switched by it.

9. Roller covering according to claim 8, characterized in that the switch actuation element (21), in the case of two torque limit switches (20, 26) has a rocker-like shape with two actuating arms (27, 28), at which respectively on one side an intrinsically adjustable spring force (24 or 25) acts and on the other side one of the torque limit switches (20 or 26) is located.

10. Roller covering according to any of claims 1 to 9, characterized in that the device for automatic cut-off forms, together with the electric motor (2), a module which engages in the winding shaft (1).

## Revendications

1. Store à rouleau comprenant un arbre d'enroulement (1), en particulier un volet roulant, qui peut être réglé entre une position finale inférieure abaissée et une position finale supérieure relevée, est déplacé dans la position finale supérieure vers une butée finale et comprend un dispositif pour la déconnexion finale automatique d'un moteur électrique (2) entraînant l'arbre d'enroulement, le couple nécessaire pour le déplacement du store à rouleau de la position finale inférieure à la position finale supérieure suivant en fonction du chemin parcouru une courbe passant par une valeur maximale et décroissant ensuite vers la position finale supérieure et le dispositif pour la déconnexion finale automatique incluant d'une part un dispositif de déconnexion (19) dépendant du couple et réagissant au couple apparaissant sur l'arbre d'enroulement (1), avec au moins un contact de fin de course de couple (20) attribué à la position finale supérieure et commutant d'une première position de commande à une deuxième position de commande lorsqu'on atteint une valeur de couple de commande déterminée, lors du relèvement et d'autre part un dispositif de commande (8) dépendant du déplacement et enregistrant le chemin parcouru par le store, avec au moins un contact de fin de course de déplacement (9) attribué à la position finale supérieure et commutant d'une première position de commande à une deuxième position de commande lorsqu'on atteint une longueur de déplacement de commande réglable lors du relèvement, les deux contacts de fin de course (9, 20) attribués à la position finale supérieure étant reliés entre eux et contrôlant l'alimentation électrique du moteur électrique (2), de telle façon que l'alimentation électrique soit interrompue lorsqu'on a simultanément la deuxième position de commande sur les deux contacts de fin de course (9, 20), la valeur de couple de commande (D) étant réglée sur une valeur inférieure à la valeur maximale (M), et la longueur de course de commande (W) étant choisie de façon que le couple qui lui correspond, sur la partie décroissante (18) de la courbe de déplacement en fonction du couple (17), soit inférieur à la valeur de couple de commande (D).

2. Store à rouleau selon la revendication 1, caractérisé en ce que les deux contacts de fin de course (9, 20) attribués à la position finale supérieure sont disposés directement dans la ligne d'alimentation électrique (46) du moteur électrique (2).

3. Store à rouleau selon la revendication 2, caractérisé en ce que les deux contacts de fin de course (9, 20) attribués à la position finale supérieure sont disposés en parallèle, du point de vue électrique.

4. Store à rouleau selon l'une des revendications 1 à 3, caractérisé en ce que le dispositif de déconnexion (19) dépendant du couple contient un deuxième contact de fin de course de couple (26) attribué au mouvement d'abaissement du store et commute d'une première position de commande dans une deuxième position de commande lorsqu'on atteint une certaine valeur de couple de commande déterminée lors de l'abaissement, et le dispositif de déconnexion (8) dépendant du déplacement contient un deuxième contact de fin de course de déplacement (16) attribué à la position finale inférieure et commutant d'une première position de commande dans une deuxième position de commande lorsqu'on atteint une longueur de déplacement de commande réglable lors de l'abaissement, les deux contacts de fin de course (16, 26) attribués à la position finale inférieure étant reliés entre eux et contrôlant l'alimentation électrique du moteur électrique (9), de telle sorte que l'alimentation électrique n'est interrompue que sur l'un des deux contacts de fin de course (16, 26) lorsqu'on se trouve dans la deuxième position de commande.

5. Store à rouleau selon la revendication 4, caractérisé en ce que les deux deuxièmes contacts de fin de course (16, 26) sont disposés directement dans la ligne d'alimentation électrique (47) du moteur électrique (2).

6. Store à rouleau selon la revendication 5, caractérisé en ce que les deux deuxièmes contacts de fin de course (16, 26) sont disposés en série l'un par rapport à l'autre, du point de vue électrique.

7. Store à rouleau selon l'une des revendications 4 à 6, caractérisé en ce que les premiers contacts de fin de course et les deuxièmes contacts de fin de course peuvent être permutés dans leur fonction pour leur montage permutable entre un côté et l'autre, par le fait qu'ils présentent chacun des lignes de raccordement permettant deux fonctions, qui se terminent sur la partie d'accouplement (51) côté dispositif d'un accouplement enfichable ou similaire, dont l'autre partie d'accouplement (52) est raccordée à un câble d'alimentation électrique (53) et est câblée de façon que les contacts de fin de course permutent leur fonction lorsque les parties d'accouplement (51, 52) sont enfichées ensemble de façon inversée.

8. Store à rouleau selon l'une des revendications 1 à 7, caractérisé en ce que le dispositif de déconnexion (19) dépendant du couple présente une partie de commande d'interrupteur (21) à monter sur le lieu d'installation du store de façon résistante à la torsion et une partie d'interrupteur (23) reliée au moteur électrique (2) de façon résistante à la torsion, et s'appuyant sur la partie de commande d'interrupteur (21) sous l'effet de la force réglable d'un dispositif à ressort (24, 25) dans le sens périphérique, sur laquelle est disposé le contact de fin de course de couple, au nombre d'un au moins, qui est déplacé, lors de la torsion de la partie d'interrupteur (23) dans le sens contraire à la force du dispositif à ressort, par rapport à la partie de commande d'interrupteur (21), en direction de celle-ci et est commandé par celle-ci.

9. Store à rouleau selon la revendication 8, caractérisé en ce que la partie de commande d'interrupteur (21) présente, pour deux contacts de fin de course (20, 26), une forme du type bascule avec deux bras de commande (27, 28), sur chacun desquels s'applique d'une part une force de ressort (24 ou 25) réglable en soi et d'autre part est disposé l'un des contacts de fin de course de couple (20 ou 26).

10. Store à rouleau selon l'une des revendications 1 à 9, caractérisé en ce que le dispositif pour la déconnexion finale automatique constitue conjointement avec le moteur électrique (2) un module s'engageant dans l'arbre d'enroulement (1).
